# EUROPÄISCHE PATENTANMELDUNG

(11) **EP 1 876 434 A2**
(43) Veröffentlichungstag der Anmeldung: **09.01.2008**
(21) Anmeldenummer: 07011845.0
(22) Anmeldetag: 16.06.2007
(51) Int. Cl.: G01L 9/04, G01L 9/06

(54) **Vorrichtung zum Messen von Kräften, insbesondere Drucksensor, und zugehöriges Herstellverfahren**

(30) Priorität: 05.07.2006 DE 102006032128
(71) Anmelder: Hydac Electronic GmbH, 66128 Saarbrücken (DE)
(72) Erfinder: Morsch, Joachim, 66646 Marpingen (DE); Rabe, Jens Dr., 66450 Bexbach (DE); Brode, Wolfgang, 07629 Hermsdorf (DE)
(74) Vertreter: Crazzolara, Helmut

(57) **Zusammenfassung**

Die Erfindung betrifft eine Vorrichtung zum Messen von Kräften, insbesondere Drucksensor (1), mit einem infolge einer Kraftbeaufschlagung, insbesondere infolge einer Druckbeaufschlagung, verformbaren Verformungskörper (2), und mit mindestens einem Messelement (4a, 4b), mittels dem eine Verformung des Verformungskörpers (2) in ein elektrisches Messsignal wandelbar ist, dadurch gekennzeichnet, dass das Messelement (4a, 4b) auf einem flächigen Substrat (6) aus einkristallinem Quarz angeordnet ist, sowie ein zugehöriges Herstellverfahren.

## Beschreibung

Die Erfindung betrifft eine Vorrichtung zum Messen von Kräften, insbesondere einen Drucksensor, und ein zugehöriges Herstellverfahren.

Bei den bekannten Drucksensoren wird ein Verformungskörper eingesetzt, der beispielsweise aus Edelstahl oder aus einem anderen im Wesentlichen elastisch verformbaren Werkstoff besteht. Auf dem Verformungskörper sind in Dickschichttechnik oder Dünnschichttechnik dehnungsempfindliche Widerstände aufgebracht, und zwar in einem Bereich des Verformungskörpers, der sich bei Druckbeaufschlagung in vorbestimmter Weise verformt. Der Verformungskörper ist eine Druckmembran, die eine Hochdruckseite von einer Niederdruckseite trennt und sich entsprechend der herrschenden Druckdifferenz verformt.

Bei den bekannten Vorrichtungen ist es erforderlich, dass der gesamte Verformungskörper den Bearbeitungsschritten der Dickschichttechnik oder Dünnschichttechnik zur Herstellung der Messelemente unterzogen wird. Dies erfordert einen hohen Aufwand bei der Herstellung derartiger Vorrichtungen. In einer Weiterentwicklung der bekannten Vorrichtungen werden die Messelemente auf einem Edelstahlsubstrat aufgebracht, auf das vor dem Aufbringen der Messelemente eine elektrisch isolierende Abdeckschicht aufgebracht werden muss. Anschließend wird das Edelstahlsubstrat durch Punktschweißen an dem ebenfalls aus Edelstahl bestehenden Verformungskörper festgelegt. Auch dies bedingt einen hohen Materialeinsatz und ein aufwendiges Herstellverfahren.

Weiterhin bekannt ist, für das Substrat einen anderen Werkstoff zu verwenden als für den Verformungskörper. Aufgrund der damit verbundenen unterschiedlichen thermischen Ausdehnungskoeffizienten kommt es bei einer Temperaturänderung zu einem Bimetall-Effekt und damit zu einer Verformung der durch die Verbindung von Substrat und Verformungskörper gebildeten Anordnung, die von den Messelementen in eine elektrisches Signal umgewandelt wird, das ein Störsignal darstellt und die messtechnische Auflösung der Vorrichtung herabsetzt.

Die DE 100 55 943 A1 zeigt eine Vorrichtung, bei der ein Keramiksubstrat mit Dehnungsmessstreifen als Messelemente mit einem Verformungskörper aus einer speziellen Metalllegierung, deren Werkstoffzusammensetzung so gewählt ist, dass der thermische Ausdehnungskoeffizient an den thermischen Ausdehnungskoeffizient des Keramiksubstrats angepasst ist.

Die DE 102 15 104 A1 zeigt eine Vorrichtung, bei der ein Halbleitersubstrat mit einem Verbindungsmittel an einem Verformungskörper aus einem Metall festgelegt ist. Zur Reduzierung der Auswirkung der unterschiedlichen thermischen Ausdehnungskoeffizienten auf das Ausgangssignal wird vorgeschlagen, als Verbindungsmittel ein Harzhaftmittel zu verwenden mit einer vorgegebenen Kriechcharakteristik zu verwenden.

Die DE 197 14 703 A1 zeigt eine Vorrichtung, bei der ein Substrat aus einkristallinem Silizium auf einem metallischen Verformungskörper festgelegt ist. Zur Reduzierung der Auswirkung der unterschiedlichen thermischen Ausdehnungskoeffizienten auf das Ausgangssignal wird vorgeschlagen, zwischen dem Substrat und dem Verformungskörper einen Trägerchip anzuordnen, der die thermisch induzierten Verformungen teilweise aufnimmt.

Der Erfindung liegt die Aufgabe zugrunde, eine Vorrichtung und ein zugehöriges Herstellverfahren bereitzustellen, welche die Nachteile des Standes der Technik überwinden. Insbesondere sollen erfindungsgemäße Vorrichtungen kostengünstig herstellbar sein, an verschiedene Kraftmessbereiche einfach anpassbar sein und dauerhaft und zuverlässig im Betrieb sein. Vorzugsweise sollen derartige Vorrichtungen eine hohe Langzeitstabilität, gute Linearität und eine geringe Temperaturabhängigkeit der Messsignale aufweisen. Das zugehörige Herstellverfahren soll kostengünstig durchführbar sein.

Diese Aufgabe ist durch die im Anspruch 1 bestimmte Vorrichtung sowie durch das im nebengeordneten Anspruch bestimmte Verfahren gelöst. Besondere Ausführungsarten der Erfindung sind in den Unteransprüchen bestimmt.

Die Verwendung von einkristallinem Quarz als Substratwerkstoff führt zu sehr guten mechanischen Eigenschaften der Vorrichtung, insbesondere im Hinblick auf eine hohe Langzeitstabilität des Elastizitätsmoduls und damit der Federkonstante. Außerdem ist eine unelastische Verformung, insbesondere ein Dehnen, Stauchen oder Kriechen, auch bei starker Verformung und/oder hohen Temperaturen ausgeschlossen. Der Offset des Ausgangssignals der Vorrichtung ist dadurch nicht nur klein, sondern vorallem nahezu unabhängig von der Temperatur. Quarzsubstrate sind außerdem in verschiedenen Größen und Dicken und vorallem in verschiedenen Kristallorientierungen erhältlich, beispielsweise als AT-Schnitt oder XT-Schnitt. Die Quarzsubstrate können mit runder oder eckiger, insbesondere quadratische Kontur als sogenannte Wafer oder im Nutzen bearbeitet und verarbeitet werden, insbesondere können die Messelemente im Nutzen unter Verwendung von Dickschichttechniken oder Dünnschichttechniken aufgebracht werden. Das Quarzsubstrat ist außerdem ein elektrischer Isolator, so dass die Messelemente und/oder Verbindungsleitungen unmittelbar auf das Substrat aufgebracht werden können.

In einer Ausführungsart wird die Anisotropie, d.h. die Richtungsabhängigkeit, des thermischen Ausdehnungskoeffizienten von einkristallinem Quarz dahingehend ausgenützt, dass das Substrat derart orientiert wird, dass es einen an den thermischen Ausdehnungskoeffizienten des Verformungskörpers angepassten Ausdehnungskoeffizienten aufweist, wodurch die durch Temperaturwechsel induzierten Spannungen und Verformungen und damit ein Temperaturdrift der Offsetspannung der Vorrichtung reduziert werden.

Dies gilt insbesondere bei einem Substrat, das in unterschiedlichen Richtungen eine unterschiedliche Erstreckung aufweist, beispielsweise in einer ersten Richtung eine größere Erstreckung aufweist als in einer zweiten Richtung, die mit der ersten Richtung einen rechten Winkel einschließt. So lässt sich beispielsweise bei einem durch AT-Schnitt hergestellten Quarzsubstrat durch die Ausrichtung dieser ersten Richtung in Bezug auf eine Kristallrichtung des Quarzsubstrates der thermische Ausdehnungskoeffizient um mehrere 10% variieren, beispielsweise zwischen etwa 9,5 ppm/K und etwa 13,5 ppm/K einstellen. In einer Ausführungsart beträgt die Erstreckung in der ersten Richtung mindestens das Zweifache der Erstreckung in der zweiten Richtung, insbesondere mehr als das Dreifache, und vorzugsweise mehr als das Vierfache. In einer Ausführungsart weist das Substrat eine rechteckige Grundfläche auf. In einer Ausführungsart ist die Grundfläche des Substrats kleiner als die Grundfläche des Verformungskörpers.

Der Ausdehnungskoeffizient des Verformungskörpers, der beispielsweise aus Stahl oder Edelstahl besteht, ist dagegen weitgehend isotrop. Wird dagegen ein Verformungskörper aus einem Werkstoff verwendet, der ebenfalls einen richtungsabhängigen thermischen Ausdehnungskoeffizienten aufweist, beispielsweise ebenfalls aus einkristallinem Quarz besteht, kann dadurch eine weitere Anpassung der Ausdehnungskoeffizienten von Substrat und Verformungskörper erfolgen.

In einer Ausführungsart sind der Verformungskörper und das Substrat separate Elemente, die im Verlauf der Herstellung miteinander verbunden werden. Alternativ hierzu kann das Messelement auch auf dem Verformungskörper aufgebracht sein, der in diesem Fall auch das Substrat bildet und daher erfindungsgemäß aus einkristallinem Quarz besteht.

Grundsätzlich können mit der erfindungsgemäßen Vorrichtung eine Vielzahl von physikalischen Größen gemessen werden, die sich in eine Kraft umwandeln lassen. Insbesondere kann die erfindungsgemäße Vorrichtung als Drucksensor ausgebildet sein, und zwar sowohl als Absolutdrucksensor als auch als Differenzdrucksensor. Besonders vorteilhaft ist die Anwendung der Erfindung für Hochdrucksensoren mit einem Nenndruckbereich von 100 bar oder mehr, insbesondere bis beispielsweise 600 bar. Darüber hinaus ist die erfindungsgemäße Vorrichtung beispielsweise auch als Beschleunigungssensor einsetzbar, wobei in diesem Fall der Verformungskörper als mindestens einseitig eingespanntes Federelement ausgebildet ist, das sich infolge einer Beschleunigung durch die Trägheit der eigenen Masse oder eines an dem Federelement angeordneten Massenkörpers verformt.

Als Messelemente können neben den bekannten Dehnungsmessstreifen alternativ oder ergänzend auch piezoresistive Messelemente mit einem hohen K-Faktor von beispielsweise von 2 bis 50 eingesetzt werden, insbesondere piezoresistive Widerstände aus einem polykristallinen Material, beispielsweise dotiertem Polysilicium. Weiterhin können auch piezoelektrische Messelemente eingesetzt werden oder es können Elektrodenflächen aufgebracht werden, die eine kapazitive Auswertung der Verformung ermöglichen.

Das Aufbringen der Messelemente erfolgt vorzugsweise in Dünnschichttechnik oder Dickschichttechnik. Das Aufbringen kann ganzflächig oder jedenfalls unstrukturiert erfolgen, beispielsweise durch Kathodenzerstäubung oder Aufdampfen, mit anschließender Strukturierung, beispielsweise durch photolitographische Prozesse und nasschemische oder trockenchemische Ätzung. Alternativ hierzu können die Messelemente auch strukturiert aufgebracht werden, beispielsweise durch Siebdruck, Aufstempeln, maskierte Kathodenzerstäubung oder dergleichen.

Vorzugsweise werden vier Messelemente in Form von vier Messwiderständen zu einer Vollbrücke verschaltet. Die Messelemente sind vorzugsweise im Nutzen auf dem flächigen Substrat aufgebracht, und es können eine Vielzahl von Substraten im Nutzen auf einem so genannten Wafer hergestellt werden. Die Dicke des Substrats beträgt typisch zwischen 50 µm und 500 µm, insbesondere zwischen 80 und 300 µm. Die Dicke des Verformungskörpers beträgt jedenfalls im Bereich des Messelements typisch im Bereich von 150 µm bis 600 µm, sodass sich durch das Festlegen des Substrats keine wesentliche Versteifung des Verformungskörpers ergibt. Der Verformungskörper selbst besteht vorzugsweise aus Edelstahl, einer gegenüber dem zu messenden Medium inerten Legierung, Keramik oder dergleichen.

Die Oberfläche des Substrats kann poliert sein, insbesondere wenn die Messelemente in Dünnschichttechnik aufgebracht werden. Wenn die Messelement in Dickschichttechnik aufgebracht werden, können auch unpolierte Oberflächen des Substrats beschichtet werden, was vorteilhaft ist.

In einer besonderen Ausführungsart ist der thermische Ausdehnungskoeffizient des Substrats an den Ausdehnungskoeffizienten des Verformungskörpers angepasst. So beträgt die Differenz der thermischen Ausdehnungskoeffizienten von Substrat und Verformungskörper im interessierenden Temperaturbereich in der Regel weniger als 5 ppm/K, vorzugsweise weniger als 3 ppm/K, und jedenfalls in einem eingeschränkten Temperaturbereich bis zu weniger als 1 ppm/K. Dadurch ist vermieden, dass aufgrund von Temperaturschwankungen Verformungen auftreten, die zu einem Ausgangssignal des Messelements und damit des Drucksensors führen, obgleich keine entsprechende Druckänderung zu detektieren ist.

Die Verbindung zwischen Substrat und Verformungskörper erfolgt vorzugsweise jedenfalls abschnittsweise flächig. In Abhängigkeit der Werkstoffe für den Verformungskörper und das Substrat kommen grundsätzlich auch Verbindungen in Betracht, die keine separate Verbindungsschicht erfordern, wie beispielsweise das eutektische Bonden unter Bildung von Eutektika, oder das so genannte anodische Bonden mit geeigneten technischen Gläsern. Weiterhin kann das Fügen auch durch Reibschweißen erfolgen, insbesondere durch Ultraschall-Reibschweißen.

In einer Ausführungsart wird für die Verbindung von Verformungskörper und Substrat eine separate Verbindungsschicht eingesetzt. Als separate Verbindungsschicht kann beispielsweise eine Klebstoffschicht, etwa ein Epoxidklebstoff oder ein Polyimidklebstoff, ein Metalllot oder ein Glaslot verwendet werden. Die Verbindungsschichten können einseitig oder zweiseitig auf das Substrat bzw. den Verformungskörper aufgebracht werden. Das Aufbringen der Verbindungsschicht kann bereits strukturiert erfolgen, beispielsweise durch Siebdruck oder durch Aufstempeln einer Klebstoffpaste oder einer Glaslotpaste. Die Verbindungsschicht kann auch ganzflächig aufgebracht werden und anschließend strukturiert werden. Grundsätzlich kommen hierfür alle aus der Dickschichttechnik und Dünnschichttechnik bekannten Verfahren in Betracht, einschließlich einer photolitographischen Strukturierung und Verwendung von Nassätztechniken und Trockenätztechniken zum Strukturieren.

In einer besonderen Ausführungsart weist die Anordnung aus Verformungskörper und Substrat einen Hohlraum auf, vorzugsweise im Bereich des Messelements. Dieser Hohlraum kann durch die Struktur der Verbindungsschicht, durch eine Strukturierung des Substrats und/oder durch eine Strukturierung des Verformungskörpers gebildet sein. Durch den Hohlraum können die mechanischen Spannungen und Dehnungen in den Bereichen des Substrates konzentriert bzw. verstärkt werden, in denen die Messelemente angeordnet sind. Dadurch ergibt sich eine erhöhte Linearität des Ausgangssignals der Vorrichtung, und dadurch kann bei gegebener zulässiger Nichtlinearität die Messempfindlichkeit der Vorrichtung erhöht werden. Weiterhin ist es vorteilhaft, wenn mindestens zwischen einigen der auf dem Substrat befindlichen Messelemente, die im Bereich eines Hohlraums angeordnet sind, eine Verbindungsstelle zwischen Substrat und Verbindungskörper existiert.

In einer besonderen Ausführungsart ist das Substrat mit einer mechanischen Vorspannung an dem Verformungskörper festgelegt, sodass sich bereits im unbelasteten Zustand der Vorrichtung ein signifikantes Ausgangssignal ergibt. Bei anschließender Kraftbeaufschlagung wird die Vorspannung mindestens teilweise kompensiert bzw. das Ausgangssignal wird kleiner. Dies ist vorteilhaft, weil sich im Fall der Überbelastung der Vorrichtung eine erhöhte Überlastsicherheit ergibt.

Eine solche Vorspannung kann beispielsweise auch dadurch herbeigeführt werden, dass in den Bereichen der Hohlräume zwischen dem Substrat und dem Verbindungskörper temporär Abstandsmittel oder Distanzkörper eingebracht werden, beispielsweise in Form von polymeren Schichten, die nach dem Festlegen des Substrats entfernt werden können, beispielsweise durch entsprechende nasschemische oder trockenchemische Verfahren.

Die Erfindung betrifft auch ein Verfahren zum Herstellen einer Vorrichtung zum Messen von Kräften. In einer Ausführungsart werden der Verformungskörper und das Substrat mit den Messelementen getrennt voneinander hergestellt. Das zu einer Vorrichtung gehörende Substrat mit den Messelementen wird nach dessen Herstellungsprozess, der vorzugsweise im Nutzen erfolgt, vereinzelt und anschließend an einem Verformungskörper festgelegt, wie bereits vorstehend beschrieben. Die Verbindung zwischen Substrat und Verformungskörper kann auch ganzflächig erfolgen, sodass das Substrat mit den Messelementen eine Art Beschichtung des Verformungskörpers bildet.

Die Anordnung des Substrats an dem Verformungskörper erfolgt dabei in der Regel auf der dem zu messenden Medium abgewandten Seite des Verformungskörpers. In vielen Anwendungsfällen wird es möglich sein, das Substrat derart an dem Verformungskörper festzulegen, dass die Seite mit den Messelementen von dem Verformungskörper weg weist. Dadurch ist insbesondere die elektrische Kontaktierung der Messelemente vereinfacht. Es gibt aber auch Anwendungsfälle, in denen es besonders vorteilhaft ist, wenn das Substrat mit seiner die Messelemente aufweisenden Oberfläche dem Verformungskörper zugewandt ist, um beispielsweise eine mechanische Beschädigung oder eine Verunreinigung der Messelemente zu verhindern.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Querschnitt durch ein erstes Ausführungsbeispiel der Erfindung,
- Fig. 2: zeigt einen Querschnitt durch ein zweites Ausführungsbeispiel der Erfindung,
- Fig. 3: zeigt einen Querschnitt durch ein drittes Ausführungsbeispiel der Erfindung,
- Fig. 4: zeigt einen Querschnitt durch ein viertes Ausführungsbeispiel der Erfindung,
- Fig. 5: zeigt einen Querschnitt durch ein fünftes Ausführungsbeispiel der Erfindung,
- Fig. 6: zeigt eine Draufsicht auf ein erfindungsgemäßes Substrat, und
- Fig. 7: zeigt die Abhängigkeit des thermischen Ausdehnungskoeffizienten des Substrats von der Richtung.

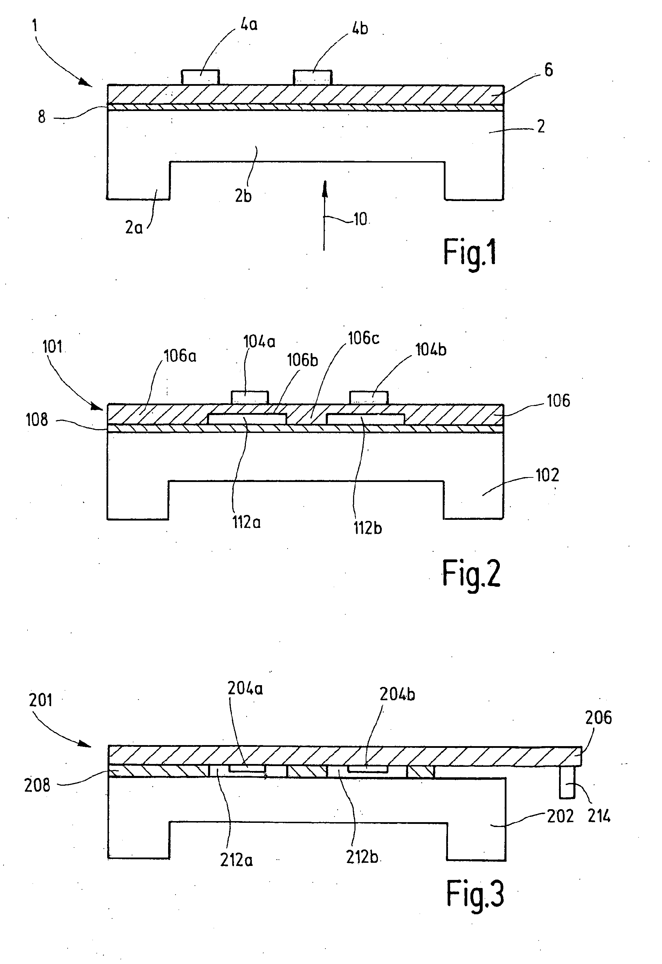

Die Fig. 1 zeigt einen Querschnitt durch ein erstes Ausführungsbeispiel der Erfindung. Dabei handelt es sich um einen erfindungsgemäßen Drucksensor 1 mit einem Verformungskörper 2 und einem daran festgelegten Substrat 6, auf dem zwei Messelemente 4a, 4b angeordnet sind. Der Verformungskörper 2 ist aus Edelstahl hergestellt, insbesondere aus einem zylindrischen Körper, der auf der dem zu messenden Medium zugewandten Seite eine Sacklochbohrung aufweist. Dadurch ergibt sich ein umlaufender Randbereich 2a der Verformungskörpers 2, der gegenüber dem dazwischen liegenden Membranbereich 2b eine größere Steifigkeit gegen Durchbiegung aufweist. Die Dicke des Verformungskörpers 2 beträgt beispielsweise im Membranbereich 2b zwischen 150 µm und 600 µm, wogegen die Dicke im Randbereich 2a zunehmen kann und mehr als 1000 µm betragen kann, insbesondere auch zwischen zwei und zehn mm betragen kann.

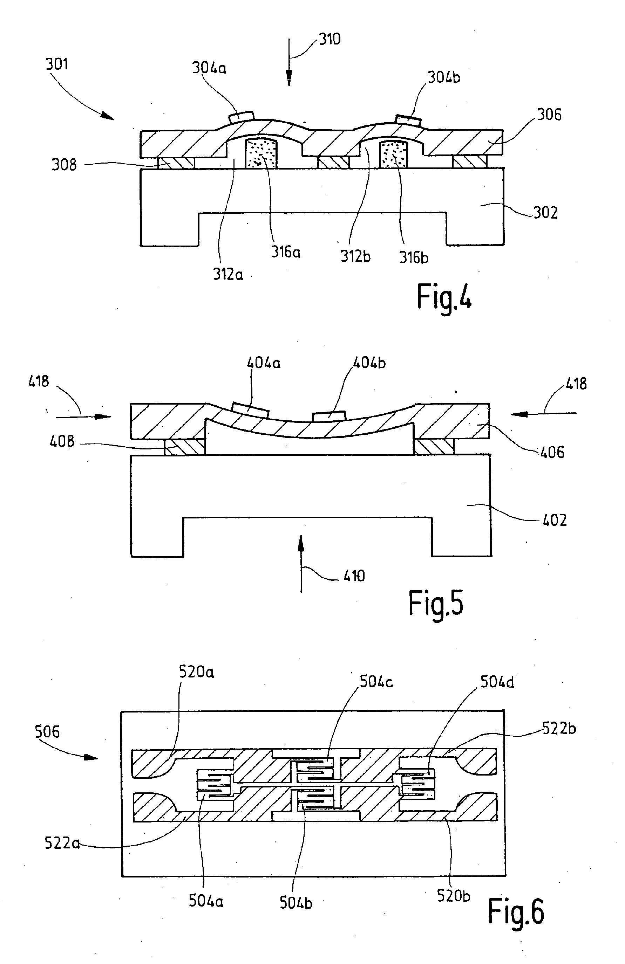

Auf der planen Stirnseite ist auf dem Verformungskörper 2 das Substrat 6 festgelegt, im dargestellten Ausführungsbeispiel mittels einer Metalllotschicht als Verbindungsschicht 8, die ganzflächig auf die Rückseite des in der Draufsicht (siehe Fig. 6) im Wesentlichen rechtwinkligen Substrats 6 aufgebracht ist, beispielsweise durch Aufsputtern, Aufdampfen oder dergleichen. Soweit erforderlich oder zweckdienlich, kann auch auf den Verformungskörper 2 eine entsprechende Metalllotschicht aufgebracht sein. Die Dicke der Metalllotschicht 8 ist deutlich geringer als die Dicke des Membranbereichs 2b und beträgt beispielsweise 50 µm. Das Substrat 6 ist etwa 250 µm dick und besteht aus einkristallinem Quarz (SiO2). Insgesamt wird die Biegesteifigkeit des Membranbereichs 2b durch die Metalllotschicht 8 und das Substrat 6 nicht signifikant erhöht. Die infolge einer Druckbeaufschlagung auftretende Verformung des Membranbereichs 2b wird durch die feste Verbindung auf das Substrat 6 übertragen.

Auf der dem Verformungskörper 2 abgewandten Oberfläche sind auf das Substrat 6 die Messelemente 4a, 4b durch Aufdampfen und anschließendes Strukturieren aufgebracht. Es handelt sich dabei um zwei Widerstände, die als Dehnungsmessstreifen ausgebildet sind. Im Falle einer Druckbeaufschlagung in Richtung des Pfeils 10 wölbt sich der Membranbereich 2b und damit im zugehörigen Bereich auch das Substrat 6 nach oben durch und das randnah angeordnete erste Messelement 4a erfährt im Wesentlichen Druckspannungen, wogegen das zentrumsnah angeordnete zweite Messelement 4b im Wesentlichen Zugspannungen erfährt. Werden die beiden Messelemente 4a, 4b zu einer Halbbrücke verschaltet, kann an der Verbindungsstelle eine elektrisches Potential abgenommen werden, das abhängig ist von dem beaufschlagten Druck.

Der Ausdehnungskoeffizient des Substrats 6 ist an den Ausdehnungskoeffizienten des Verformungskörpers 2 angepasst. Die Anpassung kann insbesondere durch Wahl des Werkstoffes für den Verformungskörper 6, beispielsweise Edelstahl mit einem linearen thermischen Ausdehnungskoeffizienten von 15 ppm/K oder weniger, und/oder durch die Orientierung der geometrischen Erstreckung des einkristallinen Substrats 6 in Bezug auf eine Kristallrichtung erfolgen. Als Werkstoff für den Verformungskörper 2 kann anstelle von Edelstahl auch Titan, eine Keramik oder dergleichen verwendet werden, wobei auch dann der Werkstoff und/oder die Orientierung des Substrats 6 so gewählt wird, dass sich geringe Unterschiede im thermischen Ausdehnungskoeffizienten ergeben. Soweit der thermische Ausdehnungskoeffizient der verwendeten Werkstoffe selbst von der Temperatur abhängig ist, wird die Anpassung jedenfalls für den Temperaturbereich herbeigeführt, in dem der Drucksensor 1 eingesetzt werden soll.

Wesentlich in diesem Zusammenhang ist auch noch eine möglichst geringe Temperatur beim Herstellen der Verbindung zwischen dem Substrat 6 und dem Verformungskörper 2. Hier kann es vorteilhaft sein, wenn die Verbindungsschicht 8 durch einen bei vergleichsweise geringen Temperaturen aushärtbaren Klebstoff gebildet ist, beispielsweise durch einen Epoxidklebstoff oder einen Polyimidklebstoff. Vorteilhaft ist, wenn der Werkstoff des Substrats 6 und/oder der Verbindungsschicht 8 einen insbesondere im Vergleich zum Werkstoff des Verformungskörpers 2 geringen Elastizitätsmodul aufweist. Bei einer Verbindung ohne zusätzliches Verbindungsmittel ist eine geringen Prozesstemperatur beim Verbinden vorteilhaft.

Die Fig. 2 zeigt einen Querschnitt durch ein zweites Ausführungsbeispiel der Erfindung. Der Drucksensor 101 weist wiederum einen Verformungskörper 102 aus Edelstahl auf. Auf der dem Substrat 106 zugewandten, beispielsweise kreisrunden Stirnfläche ist auf den Verformungskörper 102 ganzflächig die Verbindungsschicht 108 aufgebracht, beispielsweise durch Aufschleudern (spin-on) eines Klebstoffes oder eines Glaslotes, oder durch Tauchbeschichten mit einem metallischen Hartlot oder Weichlot. Das Substrat 106 ist auf der dem Verformungskörper 102 zugewandten Fläche strukturiert in der Art, dass sich erste Bereiche 106a mit verhältnismäßig großer Schichtdicke ergeben und zweite Bereiche 106b mit reduzierter Schichtdicke. In den zweiten Bereichen 106b sind die Messelemente 104a, 104b angeordnet, wobei sich in den zweiten Bereichen 106b die vom Verformungskörper 102 in das Substrat 106 eingeleiteten Verformungen konzentrieren. Darüber hinaus ist dadurch eine weitere Entkopplung von Verformungen gewährleistet, die nur durch Temperaturänderungen und aufgrund eines Unterschiedes der thermischen Ausdehnungskoeffizienten induziert werden.

Zwischen den zweiten Bereichen 106b und dem Verformungskörper 102 sind Hohlräume 112 gebildet, die allerdings auf mindestens einer Seite offen sind, insbesondere zu dem das Substrat 106 auf dessen vom Verformungskörper 102 abgewandten Seite umgebenden Raum hin offen sind. Im Bereich zwischen den beiden Hohlräumen 112a, 112b ist eine Verbindungsstelle 106c, an der das Substrat 106 zusätzlich mit dem Verformungskörper 102 verbunden ist. In einer Abwandlung des zweiten Ausführungsbeispiels kann alternativ oder ergänzend zu der die Hohlräume 112a, 112b bildenden Strukturierung des Substrats 106 auch der Verformungskörper 102 an den entsprechenden Stellen strukturiert sein, insbesondere an den entsprechenden Stellen. Vertiefungen aufweisen.

Die Fig. 3 zeigt einen Querschnitt durch ein drittes Ausführungsbeispiel der Erfindung. Wiederum weist der Drucksensor 201 einen Verformungskörper 202 auf, der nun allerdings beispielsweise aus einer Aluminiumoxydkeramik besteht. Auf die dem Substrat 206 zugewandte Stirnfläche des Verformungskörpers 202 ist zunächst ganzflächig eine Glaslotschicht als Verbindungsschicht 208 aufgebracht, beispielsweise durch ein Aufschleuderverfahren. Anschließend wurde die Glaslotschicht strukturiert, beispielsweise unter Einsatz von photolitographischen Techniken mit anschließendem Ätzen des Glaslotes. Auf die so vorbereiteten Verformungskörper 202 wird das Substrat 206 aufgelegt, die Anordnung über die Glasübergangstemperatur des Glaslotes erwärmt und anschließend wieder abgekühlt, sodass sich eine mechanisch feste und erforderlichenfalls auch gasdichte Verbindung zwischen dem Verformungskörper 202 und dem Substrat 206 ergibt.

Entsprechend der Struktur der Verbindungsschicht 208 entstehen die Hohlräume 212a, 212b. In dem zugehörigen Bereich sind auf dem Substrat 206 die Messelemente 204a, 204b angeordnet, und zwar auf der dem Verformungskörper 202 zugewandten Oberfläche. Die elektrische Kontaktierung der Messelemente 204a, 204b kann in einem über den Verformungskörper 202 hinaus ragenden Randbereich des Substrats 106 erfolgen, beispielsweise mittels einem an dem Substrat 206 angeordneten Anschlusselement 214. Bei dieser Anordnung sind die Messelemente 204a, 204b wirksam gegen eine mechanische Beschädigung und/oder gegen Schmutz und Feuchtigkeitsniederschläge geschützt. Die Verbindung zwischen den Messelementen 204a, 204b erfolgt durch Leiterbahnen, die ebenfalls in Dickschichttechnik oder Dünnschichttechnik auf das Substrat 206 aufgebracht sind. In Hybridtechnik kann darüber hinaus auch eine Signalverarbeitung mittels eines integrierten Schaltkreises erfolgen, der auf dem Substrat 206 angeordnet sein kann.

Die Fig. 4 zeigt einen Querschnitt durch ein viertes Ausführungsbeispiel der Erfindung. Das Substrat 306 ist wiederum auf der dem Verformungskörper 302 zugewandten Oberfläche strukturiert, sodass im festgelegten Zustand die Hohlräume 312a, 312b gebildet sind. Die Verbindungsschicht 308 ist in diesem Ausführungsbeispiel nur punktuell vorgesehen. Beim Festlegen des Substrats 306 am Verformungskörper 302 werden in dem Bereich der Hohlräume 31.2a, 312b Distanzelemente 316a, 316b eingelegt, sodass sich im Ausgangszustand im Bereich der Messelemente 304a, 304b die dargestellte Durchwölbung des Substrats 306 ergibt, auch wenn die Distanzelemente 316a, 316b nach dem Verbinden von Substrat 306 und Verformungskörper 302 entfernt werden. Besonders vorteilhaft in diesem Zusammenhang ist die Verwendung von Distanzelementen 316a, 316b aus einem löslichen Polymer, das darüber hinaus auch in Dickschicht- oder Dünnschichttechnik auf den Verformungskörper 302 und/oder das Substrat 306 aufgebracht werden kann. Nach dem Verbinden von Substrat 306 und Verformungskörper 302 können solche Distanzelemente 316a, 316b beispielsweise mit Lösungsmitteln ausgewaschen werden oder in einer oxidierenden Atmosphäre verascht werden.

Ohne äußere Druckbeaufschlagung sind somit die Bereiche des Substrats 306, in denen sich die Messelemente 304a, 304b befinden, vorgewölbt und die Messelemente liefern ein entsprechendes Ausgangssignal. Im Falle einer Druckbeaufschlagung in Richtung des Pfeils 310 wird diese Wölbung kompensiert, bis beispielsweise bei Anliegen des Nenndruckes das Substrat 306 auch im Bereich der Messelemente 304a, 304b plan ist. Damit kann gewährleistet werden, dass im Arbeitsbereich des Drucksensors 301 nur der Bereich von Druckspannung bis spannungsfrei durchlaufen wird, im Überlastbereich sind dadurch Dehnungsreserven gegeben.

Die Fig. 5 zeigt einen Querschnitt durch ein fünftes Ausführungsbeispiel der Erfindung. Wiederum ist das Substrat 406 nur durch punktweises Anordnen der Verbindungsschicht 408 mit dem Verformungskörper 402 verbunden. Beim Verbindungsvorgang kann in Richtung der Pfeile 418 eine Kraft auf das Substrat 406 ausgeübt werden, sodass sich eine Durchwölbung jenes Bereichs, in dem die Messelemente 404a, 404b angeordnet sind, in Richtung auf den Verformungskörper 402 ergibt, die auch nach dem Verfestigen der Verbindungsschicht 408 eingefroren wird. In diesem Fall ergibt sich eine Vorspannung, die bei einer Druckbeaufschlagung in Richtung des Pfeils 410 kompensiert wird. Wiederum ergibt sich dadurch eine Dehnungsreserve im Überlastbereich.

Die Fig. 6 zeigt eine Draufsicht auf ein Substrat 506, wie es für alle vorgenannten Ausführungsbeispiele eingesetzt werden kann. Die insgesamt vier Messelemente 504a, 504b, 504c, 504d sind zu einer Vollbrücke verschaltet, wobei die gemeinsame Elektrode des ersten Messelements 504a und des dritten Messelements 504c zu der in einem ersten Eck des Substrats 506 angeordneten Anschlusselektrode 520a für die positive Spannungsversorgung geführt ist. In entsprechender Weise ist die gemeinsame Elektrode des zweiten Messelements 504b und des vierten Messelements 504d zu der in einem zweiten Eck des Substrats 506 angeordneten Anschlusselektrode 520b für die negative Spannungsversorgung geführt. Die Mess- oder Signalspannung kann abgegriffen werden zwischen der gemeinsamen Elektrode des ersten Messelements 504a und des zweiten Messelements 504b, die zu der in einem dritten Eck des Substrats 506 angeordneten Anschlusselektrode 522a geführt ist, und der gemeinsamen Elektrode des dritten Messelements 504c und des vierten Messelements 504d, die zu der in einem vierten Eck des Substrats 506 angeordneten Anschlusselektrode 522b geführt ist. Bei einer Kraftbeaufschlagung erfahren das erste und vierte Messelement 504a, 504d eine Stauchung bzw. eine Druckspannung, und das zweite und dritte Messelement 504b, 504c eine Dehnung bzw. eine Zugspannung.

Das Substrat 506 ist im Wesentlichen rechteckförmig und kann vorteilhaft auf einem kreisrunden oder rechteckförmigen Wafer in großer Anzahl, oder in anderen Worten "im Nutzen", hergestellt werden. Typische Abmessungen für die Länge und Breite betragen Bruchteile eines mm bis einige mm, wobei die Dicke des Substrats typischerweise unter einem mm liegt. Die Abmessung eines Ausführungsbeispiels beträgt 6,7 x 1,4 x 0,17 mm³.

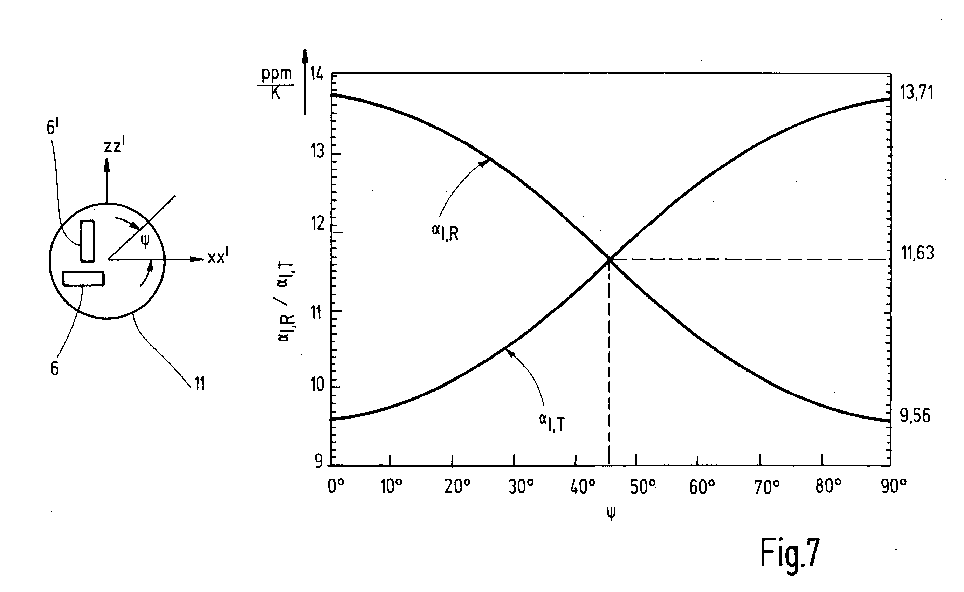

Die Fig. 7 zeigt die Abhängigkeit des radialen α_{I,R} und tangentialen α_{I,T} linearen thermischen Ausdehnungskoeffizienten des Substrats 6 in Abhängigkeit von der Winkelausrichtung Ψ des Substrats 6 in Bezug auf eine Kristallrichtung XX' eines im dargestellten Ausführungsbeispiel einkristallinen AT-Schnitt Quarzes. Die Kristallrichtung XX' und/oder eine hierzu rechtwinklig ausgerichtete Kristallrichtung ZZ' ist an dem Quarz-Ausgangsmaterial, aus dem im Nutzen die Substrate 6 hergestellt werden, gekennzeichnet, beispielsweise durch einen Flat bei einem kreisförmigen Ausgangsmaterial, durch die Ausrichtung einer Kante bei einem quadratischen oder rechteckförmigen Ausgangsmaterial, oder auf sonstige Weise. Der radiale Ausdehnungskoeffizient α_{I,R} beträgt bei einem Winkel Ψ = 0° etwa 13,7 ppm/K und nimmt mit steigendem Winkel Ψ bis auf einen Wert von etwa 9,6 ppm/K bei Ψ = 90° ab. Umgekehrt nimmt der tangentiale Ausdehnungskoeffizient α_{I,T} ausgehend von einem Wert von etwa 9,6 ppm/K bei einem Winkel Ψ = 0° mit steigendem Winkel Ψ bis auf einen Wert von etwa 13,7 ppm/K bei Ψ = 90° zu. Bei einem Winkel Ψ von 45° nehmen beide Ausdehnungskoeffizienten α_{I,T}, α_{I,T} einen Wert von etwa 11,6 ppm/K an.

Durch die Ausrichtung des Substrats 6, das im Nutzen aus einem waferförmigen oder scheibenförmigen Ausgangsmaterial 11 hergestellt werden kann, kann der relevante Ausdehnungskoeffizient des Substrats 6 gewählt werden. In der linken Bildhälfte der Fig. 7 ist beispielhaft die Anordnung eines ersten Substrats 6 in Bezug auf das Ausgangsmaterial 11 dargestellt, bei der die erste Richtung mit der größeren Erstreckung des Substrats 6 einen Winkel Ψ = 0° zu der Kristallrichtung XX' aufweist. Dementsprechend ergibt sich für die relevante Ausdehnung in radialer Richtung ein Ausdehnungskoeffizient von α_{I,R} = 13,7 ppm/K. Außerdem ist in der linken Bildhälfte der Fig. 7 die Anordnung eines zweiten Substrats 6' in Bezug auf das Ausgangsmaterial 11 dargestellt, bei der die erste Richtung mit der größeren Erstreckung des Substrats 6' einen Winkel Ψ = 90° zu der Kristallrichtung XX' aufweist. Dementsprechend ergibt sich für die relevante Ausdehnung in radialer Richtung ein Ausdehnungskoeffizient von α_{I,R} = 9,6 ppm/K. Je nach dem wie groß der Ausdehnungskoeffizient des Verformungskörpers 2 ist, an den der Ausdehnungskoeffizient des Substrats 6 angepasst werden soll, kann auch eine Ausrichtung zwischen den Winkelpositionen Ψ = 0° und Ψ = 90° gewählt werden und dadurch jeder Wert zwischen 9,6 ppm/K und 13,7 ppm/K für den Ausdehnungskoeffizienten eingestellt werden.

## Patentansprüche

1. Vorrichtung zum Messen von Kräften, insbesondere Drucksensor (1), mit einem infolge einer Kraftbeaufschlagung, insbesondere infolge einer Druckbeaufschlagung, verformbaren Verformungskörper (2), und mit mindestens einem Messelement (4a, 4b), mittels dem eine Verformung des Verformungskörpers (2) in ein elektrisches Messsignal wandelbar ist, **dadurch gekennzeichnet, dass** das Messelement (4a, 4b) auf einem flächigen Substrat (6) aus einkristallinem Quarz angeordnet ist.

2. Vorrichtung nach Anspruch 1, **dadurch gekennzeichnet, dass** das Substrat (6) an dem Verformungskörper (2) derart festgelegt ist, dass eine Verformung des Verformungskörpers (2) infolge der Kraftbeaufschlagung auch eine Verformung des Substrats (6) zur Folge hat.

3. Vorrichtung nach einem der vorangegangenen Ansprüche, **dadurch gekennzeichnet, dass** die Dicke des flächigen Substrats (6) mindestens im Bereich des Messelements (4a, 4b) geringer ist als die Dicke des Verformungskörpers (2) in diesem Bereich.

4. Vorrichtung nach einem der vorangegangenen Ansprüche, **dadurch gekennzeichnet, dass** das Substrat (6) einen thermischen Ausdehnungskoeffizienten aufweist, der an den thermischen Ausdehnungskoeffizienten des Verformungskörpers (2) angepasst ist, insbesondere dass der Unterschied der thermischen Ausdehnungskoeffizienten im Bereich zwischen 0 und + 100°C, vorzugsweise im Bereich zwischen -40 und + 125°C, weniger als 5 ppm/K, vorzugsweise weniger als 3 ppm/K beträgt.

5. Vorrichtung nach einem der vorangegangenen Ansprüche, **dadurch gekennzeichnet, dass** das Substrat (6) in einer ersten Richtung eine größere Erstreckung aufweist als in einer zweiten Richtung, die mit der ersten Richtung einen rechten Winkel einschließt, insbesondere dass das Substrat (6) eine rechteckige Grundfläche aufweist.

6. Vorrichtung nach Anspruch 5, **dadurch gekennzeichnet, dass** die erste Richtung mit der größeren Erstreckung des Substrats (6) einen vorgebbaren Winkel zu einer Kristallrichtung des einkristallinen Quarzes aufweist, insbesondere dass die erste Richtung bezogen auf eine Kristallrichtung des einkristallinen Quarzes derart gewählt ist, dass der thermische Ausdehnungskoeffizient des Substrats in der ersten Richtung angepasst ist an den thermischen Ausdehnungskoeffizienten des Verformungskörpers.

7. Vorrichtung nach einem der vorangegangenen Ansprüche, **dadurch gekennzeichnet, dass** das Substrat (6) mindestens bereichsweise flächig an dem Verformungskörper (2) festgelegt ist, insbesondere mittels einer Klebstoffschicht, einer Metalllotschicht, einer Glaslotschicht oder durch Reibschweißen, insbesondere Ultraschall-Reibschweißen.

8. Vorrichtung nach einem der vorangegangenen Ansprüche, **dadurch gekennzeichnet, dass** die Anordnung aus Verformungskörper (2) und Substrat (6) im Bereich des Messelements (4a, 4b) einen Hohlraum zwischen dem Substrat (6) und dem Verformungskörper (2) aufweist.

9. Vorrichtung nach Anspruch 8, **dadurch gekennzeichnet, dass** die Vorrichtung mindestens zwei Messelemente (4a, 4b) aufweist, die jeweils im Bereich eines Hohlraums angeordnet sind, und dass zwischen den zwei Messelementen (4a, 4b) eine Verbindungsstelle zwischen Substrat (6) und Verbindungskörper (2) angeordnet ist.

10. Vorrichtung nach einem der vorangegangenen Ansprüche, **dadurch gekennzeichnet, dass** das Substrat (6) mit einer mechanischen Vorspannung an dem Verformungskörper (2) festgelegt ist, die bei Kraftbeaufschlagung mindestens teilweise kompensierbar ist.

11. Vorrichtung nach einem der vorangegangenen Ansprüche, **dadurch gekennzeichnet, dass** das Messelement (4a, 4b) an dem Substrat (6) in Dünnschichttechnik oder Dickschichttechnik aufgebracht ist.

12. Verfahren zum Herstellen einer Vorrichtung zum Messen von Kräften, insbesondere Drucksensor (1), mit einem infolge einer Kraftbeaufschlagung, insbesondere infolge einer Druckbeaufschlagung, verformbaren Verformungskörper (2), und mit mindestens einem Messelement (4a, 4b), mittels dem eine Verformung des Verformungskörpers (2) in ein elektrisches Messsignal wandelbar ist, **dadurch gekennzeichnet, dass** das Messelement (4a, 4b) auf einem flächigen Substrat (6) aus einkristallinem Quarz aufgebracht wird.

13. Verfahren nach Anspruch 12, **dadurch gekennzeichnet, dass** das Substrat (6) im Nutzen hergestellt wird und aus dem Nutzen in einer vorgebbaren Kristallrichtung bezogen auf den einkristallinen Quarz vereinzelt wird.

14. Verfahren nach Anspruch 12 oder 13, **dadurch gekennzeichnet, dass** das Substrat (6) an dem Verformungskörper (2) mindestens bereichsweise flächig festgelegt wird.
